# EUROPEAN PATENT APPLICATION

(11) **EP 4 637 211 A1**
(43) Date of publication of application: **22.10.2025**
(21) Application number: 25170996.0
(22) Date of filing: 16.04.2025
(51) Int. Cl.: H04W 28/16, H04W 88/08

(54) **THROUGHPUT OPTIMISATION**

(30) Priority: 17.04.2024 GB 202405388
(71) Applicant: IONX Networks Limited, Marlow, Buckinghamshire SL7 1EY (GB)
(72) Inventor: FAIRWEATHER, Kenneth James, Marlow, SL7 1EY (GB); PERSAUD, Marlon Peter, Marlow, SL7 1EY (GB)
(74) Representative: D Young & Co LLP

(57) **Abstract**

A computer-implemented method for optimising throughput capacity in an telecommunications network, the telecommunications network comprising a core network, a centralised controller, one or more scheduler devices and a plurality of radio devices, the method comprising: obtaining, by the centralised controller, network topology information, wherein the network topology information comprises information on network paths between the core network, the one or more scheduler devices and the plurality of radio devices, wherein the one or more scheduler devices are operable to schedule operation of the plurality of radio devices based on a scheduling capacity for each of the plurality of radio devices, and wherein two or more of the plurality of radio devices share at least part of the same network path to the core network; generating, by the centralised controller and based on the network topology information, a cluster scheduling plan comprising an updated scheduling capacity for each of the plurality of radio devices, sending, by the centralised controller and to the one or more scheduler devices, the updated scheduling capacity for each of the plurality of radio devices.

## Description

### FIELD AND BACKGROUND

The present techniques relate to optimising throughput capacity in a telecommunications network such as a Mobile Network Operator (MNO) network or a Neutral Host (NH) network which combines multiple MNO and/or private networks. More particularly, but not exclusively, the disclosure describes a method, computer program and device which optimises throughput capacity by controlling the scheduling capacity of a plurality of radio devices based on network topology information.

In recent years the demands on mobile networks have steadily increased with consumers increasingly coming to expect consistent high performance levels with minimal signal interruptions or other connectivity issues.

In order to ensure high and consistent network throughput, MNO have provided ever greater capacity through the installation of new cell sites. However, the addition of new cell sites also requires supporting infrastructure such as power and onward network connectivity which can be costly to provide in both time and resources.

At least certain embodiments of the present disclosure address one or more of these problems as set out above.

### SUMMARY

Viewed from one perspective, there is provided a computer-implemented method for optimising throughput capacity in a telecommunications network, the telecommunications network comprising a core network, a centralised controller, one or more scheduler devices and a plurality of radio devices, the method comprising: obtaining, by the centralised controller, network topology information, wherein the network topology information comprises information on network paths between the core network, the one or more scheduler devices and the plurality of radio devices, wherein the one or more scheduler devices are operable to schedule operation of the plurality of radio devices based on a scheduling capacity for each of the plurality of radio devices, and wherein two or more of the plurality of radio devices share at least part of the same network path to the core network; generating, by the centralised controller and based on the network topology information, a cluster scheduling plan comprising an updated scheduling capacity for each of the plurality of radio devices, sending, by the centralised controller and to the one or more scheduler devices, the updated scheduling capacity for each of the plurality of radio devices.

In other words, the present approach can be considered as an approach which allows for optimisation of throughput capacity in a telecommunications network. The approach does so by obtaining information on the network topology which connects the core network, one or more scheduler devices and a plurality of radio devices to each other where at least two of the radio devices at least partly share a network path to the core network (e.g. share one or more network links along their network paths). Based on this network topology a centralised controller can process this information to determine scheduling capacities for each of the plurality of radio devices which the network paths can reliably support.

As identified by the present inventors, this approach allows for a network architect to design a telecommunications network, such as a Mobile Network Operator (MNO) network or a Neutral Host (NH) network which combines multiple MNO and/or private networks, which does not require full provisioning of every network link. Typical prior approaches require full provisioning of every network link for the "worst case" of maximum utilisation of the plurality of radio devices in order to avoid instability or services interruptions due to dropped data by network links being unable to handle the required network traffic. However, the present approach can ensure stable and consistent service without the need for full provisioning by using a centralised controller to send updated scheduling capacities for the radio devices to their corresponding scheduler devices such that even if the each radio device fully utilises its updated scheduling capacity the network traffic stays within the capacity of each of the network links of the network paths. Thereby, the present approach can allow for an underprovisioning (e.g., from shared links or from the use of daisy-chaining) of network capacity while maintaining reliability. This underprovisioning can reduce the costs of network deployment to support new network cell sites. Furthermore, the presently claimed approach is resilient to temporary disruptions to network paths (e.g. when using a lossy connection such as mmWave for the backhaul/midhaul) such that the present techniques can adjust the scheduling capacities of the plurality of radio devices to ensure reliable service can be maintained. Furthermore, the scheduler devices can be "off the shelf" devices which are substantially unmodified and that do not need to be aware of the present techniques as long as they are able to accept updates to the scheduling capacity for the radio devices they manage.

Viewed from one perspective, there is provided a computer program for controlling a device to perform any of the above-described methods. In some examples, the computer program is encoded on a computer-readable medium

Viewed from one perspective, there is provided a device comprising: a processor and data storage, the device being configured to perform any of the above-described methods.

Other aspects will also become apparent upon review of the present disclosure, in particular upon review of the Brief Description of the Drawings, Detailed Description and Claims sections.

### BRIEF DESCRIPTION OF THE DRAWINGS

Examples of the disclosure will now be described, by way of example only, with reference to the accompanying drawings in which:
Figure 1A: Schematically illustrates an example telecommunications network in which teachings of the disclosure can be implemented.
Figure 1B: Schematically illustrates a second example telecommunications network in which teachings of the disclosure can be implemented.
Figure 1C: Schematically illustrates a third example telecommunications network in which teachings of the disclosure can be implemented.
Figure 1D: Schematically illustrates a fourth example telecommunications network in which teachings of the disclosure can be implemented.
Figure 1E: Schematically illustrates a fifth example telecommunications network in which teachings of the disclosure can be implemented
Figure 2: Schematically illustrates a method for optimising throughput capacity in a telecommunications network.
Figure 3: Schematically illustrates a sequence diagram showing messages between a centralised controller, a scheduler device and a radio device.
Figure 4: Schematically illustrates an example of an electronic device which can be used to implement teachings of the disclosure.

While the disclosure is susceptible to various modifications and alternative forms, specific example approaches are shown by way of example in the drawings and are herein described in detail. It should be understood however that the drawings and detailed description attached hereto are not intended to limit the disclosure to the particular form disclosed but rather the disclosure is to cover all modifications, equivalents and alternatives falling within the spirit and scope of the claimed invention.

It will be recognised that the features of the above-described examples of the disclosure can conveniently and interchangeably be used in any suitable combination.

### DETAILED DESCRIPTION

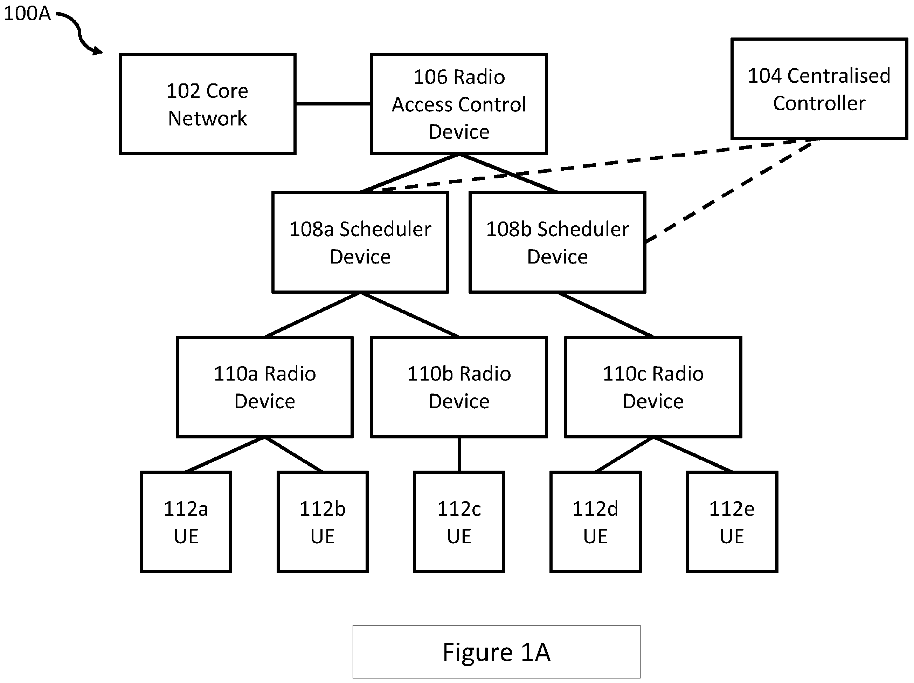

Figure 1A shows a schematic illustration of an example telecommunications network 100A in which teachings of the disclosure can be implemented.

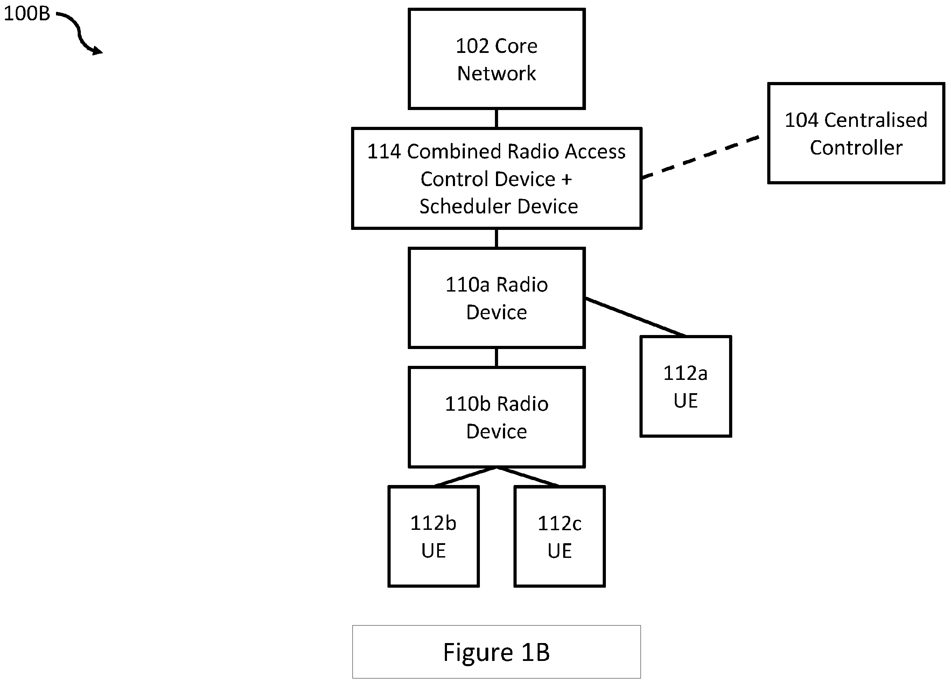

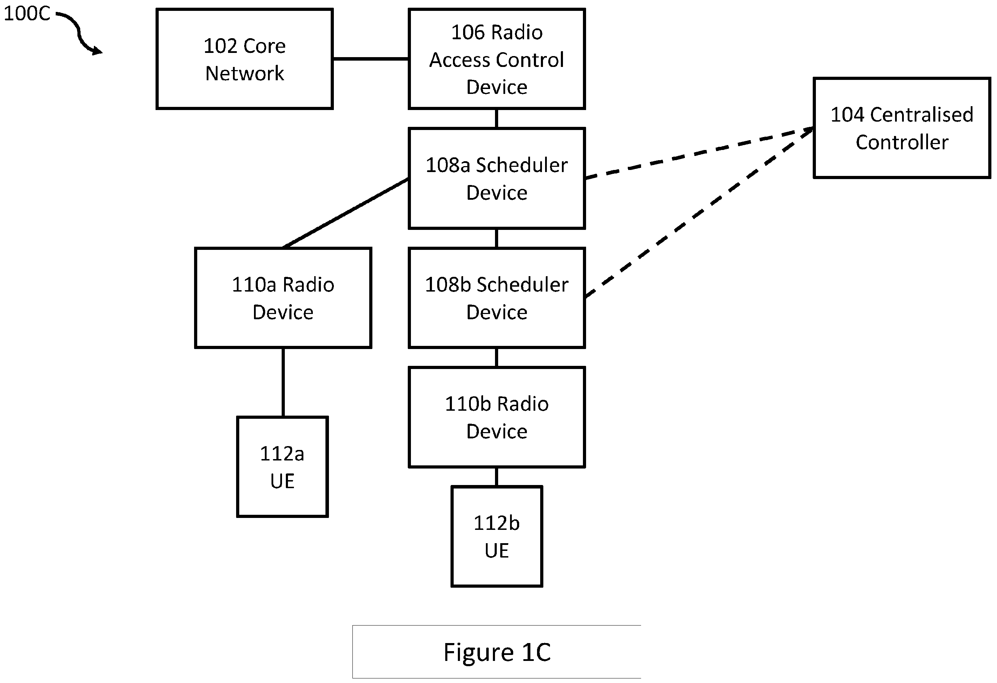

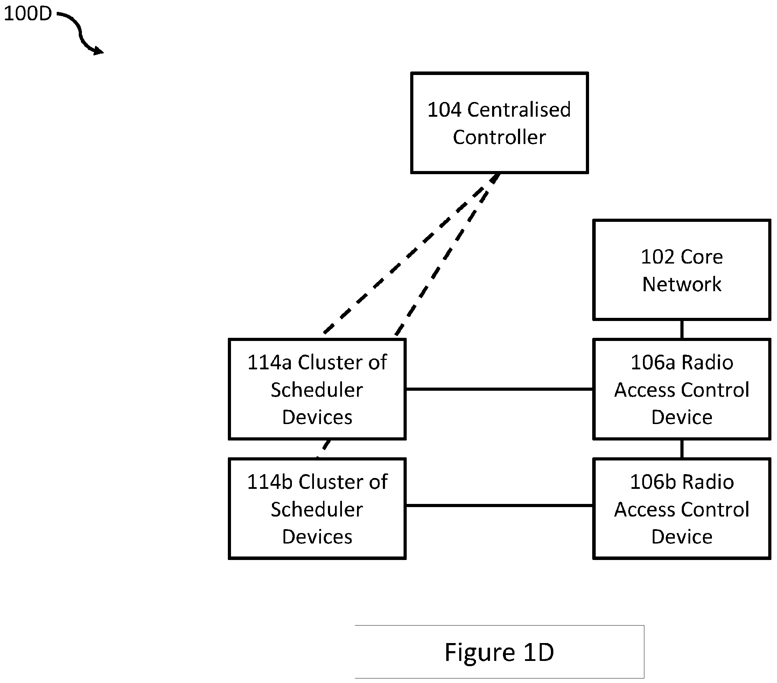

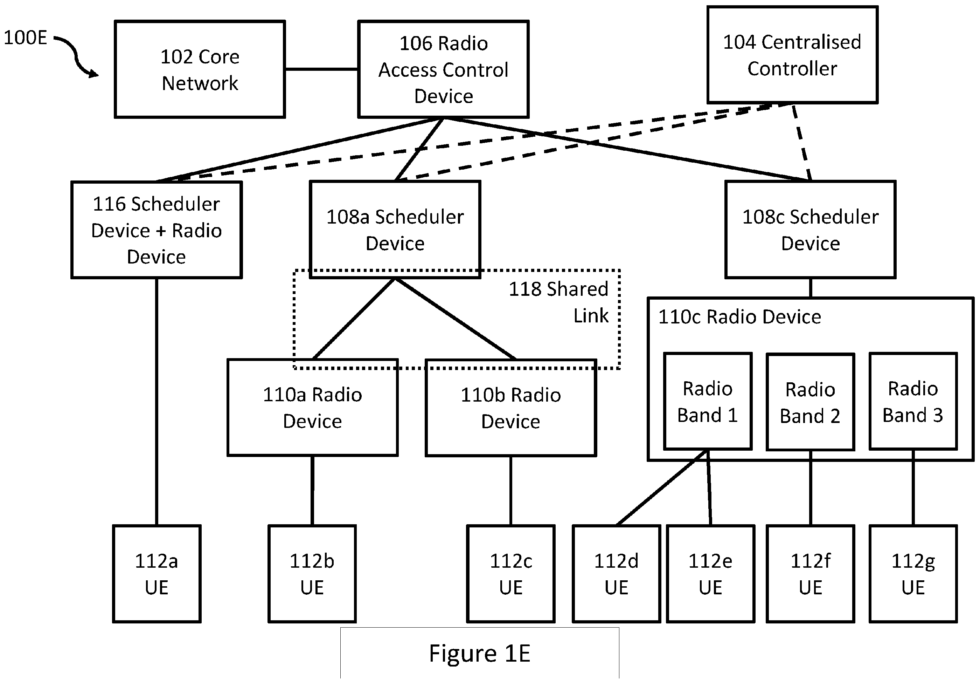

As can be seen, figure 1A depicts a core network 102, a centralised controller 104, a radio access control device 106, two scheduler devices 108a, 108b, three radio devices 110a, 110b, 110c and five user equipment devices 112a, 112b, 112c, 112d and 112e. Network connections between the various devices are shown as solid lines. It will be appreciated that each network connection depicted can represent a direct network link but also represent a network connection through a plurality of links through one or more intermediate devices/nodes. The dashed lines represent logical paths between the centralised controller 104 and the scheduler devices 108a, 108b by which the centralised controller 104 can provided updated scheduling capacities for the radio devices 110a, 110b, 110c to the scheduler devices 108a, 108b. It will be appreciated that centralised controller 104 may be a single dedicated device located somewhere in the telecommunications network 100A, combined with one or more of the other network devices, distributed across a plurality of dedicated/shared devices and/or be hosted in the cloud. The exact network path between the centralised controller 104 and the scheduler devices 108a, 108b is omitted for clarity. It will be appreciated that the specific number and layout of devices is merely an example useful for illustrating a telecommunications network on which the teachings of the disclosure can be implemented. Further examples are shown in figures 1B, 1C, 1D and 1E.

As can be seen in telecommunications network 100A, radio device 110a and radio device 110b share a path to the core network 102 via a shared link between scheduler device 108a and radio access control device 106 (as well as a shared link between core network 102 and radio access control device 106). While in the present example centralised controller 104, radio access control device 106, scheduler devices 108a, 108b and radio devices 110a, 110b, 110c are depicted as separate devices, in other examples, one or more of these devices can be combined.

In some examples, one or more scheduler devices and one or more radio devices are combined into one device. Thereby these elements of the telecommunications network can be conveniently co-located which can reduce latency and can allow for sharing of hardware. In other examples, the one or more scheduler devices and one or more radio devices being separate devices allows for disaggregation of functionality which can enhance efficiency e.g. by avoiding redundant capacity for higher-level functionality. This disaggregation can also allow for virtualisation of higher-level functionality.

In some examples, a radio access control device is combined with one or more scheduler devices and/or one or more radio devices into one device. Thereby these elements of the telecommunications network can be conveniently co-located which can reduce latency and can allow for sharing of hardware. In other examples, the radio access control device can be a separate device which allows for disaggregation of functionality which can enhance efficiency e.g. by avoiding redundant capacity for higher-level functionality. This disaggregation can also allow for virtualisation of higher-level functionality.

Figure 1B shows a schematic illustration of a second example telecommunications network 100B in which teachings of the disclosure can be implemented.

Similar to figure 1A, figure 1B depicts a core network 102 and a centralised controller 104. However, in the case of figure 1B the radio access control device and scheduler device are combined as a single device 114. Further, only two radio devices 110a, 110b are depicted. As can be seen, radio device 110b is now daisy-chained through radio device 110a such that two radio devices now share a link between radio device 110a and combined radio access control device + scheduler device 114 in their network paths to the core network 102.

In some examples, the network path of a first of a plurality of radio devices to one or more scheduler devices is daisy chained through a second of the plurality of radio devices. Thereby network infrastructure for the two radio devices is shared thereby reducing resource cost and speeding up installation. It will be appreciated that, in some examples, the daisy-chaining of radio devices can follow features of a building (e.g. walls or cable conduits) or paths along a transport route (e.g. a road or railway) thereby facilitating installation.

Figure 1C shows a schematic illustration of a third example telecommunications network 100C in which teachings of the disclosure can be implemented.

Similar to figure 1A, figure 1C depicts a core network 102, a centralised controller 104, a radio access control device 106 and two scheduler device 108a, 108b. However, in the case of figure 1C only two radio devices 110a, 110b are depicted. As can be seen, scheduler device 108b is now daisy-chained through scheduler device 108a such that radio device 110a and radio device 110b now share a link between scheduler device 108a and radio access control device 106 in their network paths to the core network 102.

In some examples, the network path from a scheduler device which is operable to schedule operation of a radio device to the core network is daisy chained through a second of the plurality of scheduler devices. Thereby network infrastructure for the scheduler devices is shared thereby reducing resource cost and speeding up installation. It will be appreciated that, in some examples, the daisy-chaining of scheduler devices can follow features of a building (e.g. walls or cable conduits) or paths along a transport route (e.g. a road or railway) thereby facilitating installation.

Figure 1D shows a schematic illustration of a fourth example telecommunications network 100D in which teachings of the disclosure can be implemented.

As can be seen, figure 1D depicts a core network 102, a centralised controller 104, two radio access control devices 106a, 106b and two clusters of scheduler devices 114a, 114b. Each of the two clusters of scheduler devices 114a, 114b comprise a plurality of scheduler devices of the type discussed in the disclosure. In this case, clusters of scheduler devices 114a is managed by radio access control device 106a and cluster of scheduler devices 114b is managed by radio access control device 106b. As can be seen, radio access control device 106b is daisy-chained through radio access control device 106a such that all paths from the cluster of scheduler devices 114b to the core network 102 share a link between radio access control device 106a and the core network 102 with paths from the cluster of scheduler devices 114a to the core network 102. In some examples, having radio access control devices daisy-chained in this fashion allows for network infrastructure for the radio access control devices to be shared thereby reducing resource cost and speeding up installation. It will be appreciated that, in some examples, the daisy-chaining of radio access control devices can follow features of a building (e.g. walls or cable conduits) or paths along a transport route (e.g. a road or railway) thereby facilitating installation.

Figure 1E shows a schematic illustration of a fourth example telecommunications network 100D in which teachings of the disclosure can be implemented.

The figure shows a number of further features which may be present in some examples. In some examples, as depicted with element 116, the scheduler device can be combined with the radio device as a single device. Additionally, or alternatively, in some examples, and as discussed in further detail below, a single link can be shared between multiple devices. In the depicted example, scheduler device 108a communicates using the same shared link 118 with both of radio device 110a and radio device 110b. Such a shared link 118 can, in some examples, be a mmWave or WiFi link. Additionally, or alternatively, in some examples, a radio device can be operable to communicate with a plurality of different radio bands. In the depicted example radio device 110c communicates with UE 112d and UE 112e using radio band 1, with UE 112f using radio band 2 and with UE 112g with radio band 3.

Various elements described in figures 1A, 1B, 1C, 1D, 1E, will now be described in further detail. In some examples, the centralised controller 104 comprises a Radio Access Network Intelligent Controller (RIC). Thereby the centralised controller acts to optimise and managed radio resources efficiently in a Radio Access Network (RAN). Further it can operate as part of a 5G network and/or as part of an Open RAN architecture. In some examples, the centralised controller can operate in accordance with one or more standards from 3GPP, ITU, O-RAN ALLIANCE and/or Small Cell Forum. Thereby interoperability with other devices and networks can be ensured.

The scheduler devices 108 are operable to schedule networking operations on one or more radio devices 110 that they manage. In particular, they act to manage radio communication (e.g. frequencies, time slots and/or transmission power) to one or more UE devices 112 that the radio device 110 is in communication with. In some examples, scheduler device comprises a Distributed Unit (DU). Thereby the scheduler devices 108 can operate as part of a 5G network and/or as part of an Open RAN architecture. In some examples, the scheduler device can operate in accordance with one or more standards from 3GPP, ITU, O-RAN ALLIANCE and/or Small Cell Forum. Thereby interoperability with other devices and networks can be ensured. In some examples, the telecommunications network only includes a single scheduler device 108 that schedules network operations on all radio devices in the telecommunications network. In other examples, the telecommunications network comprises a plurality of scheduler devices where each of the plurality of scheduler devices is operable to schedule operation on a different one or more of the plurality of radio devices. Thereby a network with lower latency/bandwidth utilisation can be supported as each scheduler device can be located closer to its radio devices.

The radio devices 110 act to handle radio frequency (RF) transmission and reception to User Equipment (UE) devices 112. In some examples, each of the plurality of radio devices comprise a Radio Unit (RU). Thereby the radio devices 110 can operate as part of a 5G network and/or as part of an Open RAN architecture. In some examples, the radio device can operate in accordance with one or more standards from 3GPP, ITU, O-RAN ALLIANCE and/or Small Cell Forum. Thereby interoperability with other devices and networks can be ensured.

In some examples, one or more UE devices connect to the telecommunications network through one or more of the plurality of radio devices. Thereby UE devices can connect to the telecommunications network and benefit from the enhanced reliability and network throughput provided by the method.

In some examples, the telecommunications network comprises a radio access control device 106, the radio access control device being operable to manage access control for one or more devices in the telecommunications network. It will be appreciated that in each of telecommunications networks 100A, 100B, 100C, 100D, 100E a radio access control device 106 can be present or omitted. In some examples, the radio access control device comprises a Centralised Unit (CU). Thereby the radio access control device 106 can operate as part of a 5G network and/or as part of an Open RAN architecture. In some examples, the radio access control device can operate in accordance with one or more standards from 3GPP, ITU, O-RAN ALLIANCE and/or Small Cell Forum. Thereby interoperability with other devices and networks can be ensured.

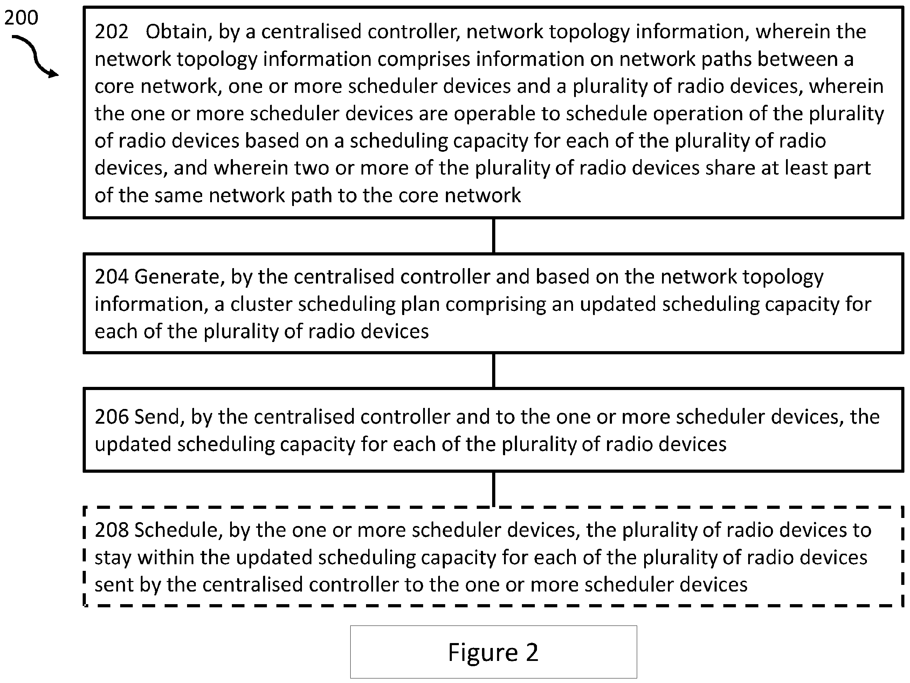

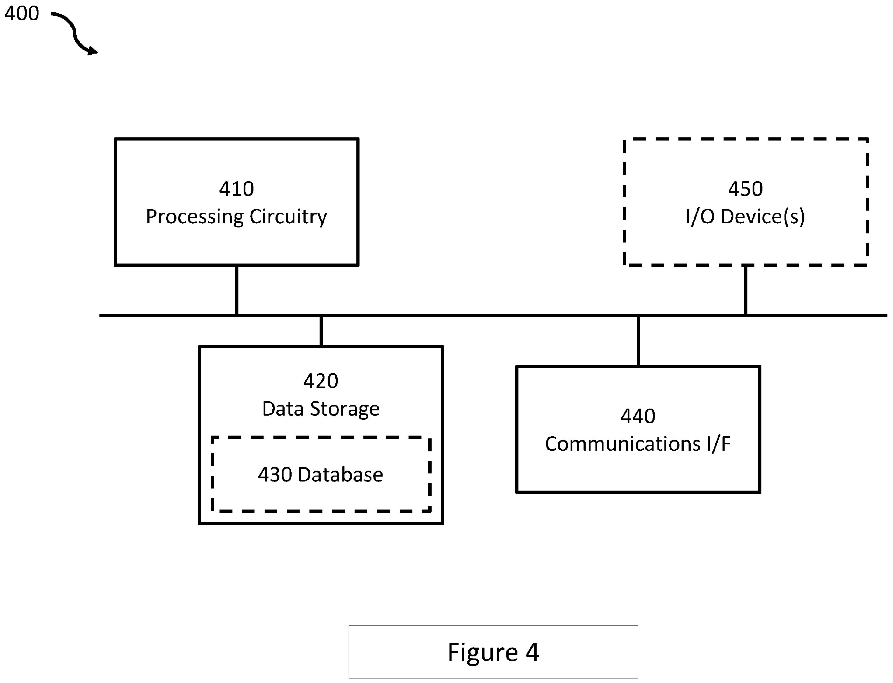

Figure 2: Schematically illustrates a method 200 for optimising throughput capacity in a telecommunications network. It will be appreciated, that the method can be performed using the electronic device 400 of figure 4 and can be performed in any of the telecommunications networks 100A, 100B, 100C, 100D, 100E depicted in figures 1A, 1B, 1C, 1D, 1E. The method includes the following steps.

At step 202, the method obtains, by a centralised controller, network topology information, wherein the network topology information comprises information on network paths between a core network, one or more scheduler devices and a plurality of radio devices, wherein the one or more scheduler devices are operable to schedule operation of the plurality of radio devices based on a scheduling capacity for each of the plurality of radio devices, and wherein two or more of the plurality of radio devices share at least part of the same network path to the core network. In some examples, the network topology information includes complete network topology information on all the network paths between the core network, the one or more scheduler devices and the plurality of radio devices. Thereby a precise cluster scheduling plan that takes into account the full topology can be generated. In other examples, the network topology information includes a subset of the complete network topology information on the network paths between the core network, the one or more scheduler devices and the plurality of radio devices. Thereby a cluster scheduling plan can be generated even if the full topology information is not available. Furthermore the data required to be obtained is reduced thus saving resources (e.g. storage and/or bandwidth).

In some examples, the obtaining further comprises obtaining a throughput capacity of each of the network paths and an initial scheduling capacity of each of the plurality of radio devices, and wherein the generating is further based on the throughput capacities and the initial scheduling capacities. In some examples, the obtaining further comprises obtaining the throughput capacity of each network link that makes up the network paths. Thereby the method can set the updated scheduling capacities to ensure that the throughput capacities of each network path and/or network link is not exceeded thus ensuring good network performance.

In some examples, where the throughput capacities are sufficient to support the initial scheduling capacity the method need not generate or send updated scheduling capacities thereby avoiding unnecessary network traffic and processing. In other examples, the throughput capacity of one or more of the network paths is insufficient for the worst-case throughput demand when the plurality of radio devices fully utilise their initial scheduling capacity. Thereby through use of the present techniques loss of data or poor network performance (e.g. delayed delivery of data) is avoided by generating and sending updated scheduling capacities.

In some examples, the throughput capacities of the network paths are based on theoretical maximum throughput capacities of the network paths, and/or wherein the initial scheduling capacities are based on the theoretical full radio capacities of the radio devices. Thereby the telecommunications network can attempt to obtain the maximum performance while still ensuring that loss of data and poor network performance is avoided.

In some examples, one or more of the network paths comprise one or more half-duplex links and wherein the obtained network topology information includes an indication of the one or more half-duplex links. Thereby the method is able to utilise half-duplex links which can be cheaper or use a technology which can be inherently half-duplex such as some wireless network links. Thus the method takes account of the collective uplink and downlink requirements to avoid drops in performance.

In some examples, the network paths comprise one or more of dedicated wired, shared wired, dedicated wireless and/or a shared wireless links. In some examples, dedicated links can be considered as point-to-point links (PtP) and shared links can be considered as PtMP links (PtMP). Thereby a variety of different link types can be used and can include lossy links (e.g. wireless connections) as well as lossless links. Where the network paths are shared, existing network infrastructure can be used leading to a reduction in cost and speeding up installation. Examples of wired links include: Ethernet, Fiber Optic, Coaxial Cable, Powerline Communication, Serial Connection, USB (Universal Serial Bus), HDMI (High-Definition Multimedia Interface) and Thunderbolt. Examples of wireless links include: mmWave, microWave, 3G Networks, 4G Networks, 5G Networks, Wi-Fi (Wireless Fidelity), Bluetooth, Zigbee, Z-Wave and optical (e.g. LiFi, Laser and IR) .

In some examples, where the telecommunications network further comprises a radio access control device, the radio access control device being operable to manage access control for one or more devices in the telecommunications network, the topology information comprises a network path between the radio access control device and the one or more scheduler devices. Thereby the cluster scheduling plan can take account of the network path between the radio access control device and the one or more scheduler devices.

In some examples the network topology information comprises a network path between the radio access control device and the core network. Thereby the cluster scheduling plan can take account of the network path between the radio access control device and the core network.

In some examples, the obtaining comprises retrieval from a database, and/or automatic determination through network discovery. Where the obtaining comprises retrieval from a database this allows for a quick and efficient obtaining of the data. Where the obtaining is automatically determined, the actual current state can be determined as opposed to, for example, a presumed state.

The method then continues to step 204.

**At** step 204, the method generates, by the centralised controller and based on the network topology information, a cluster scheduling plan comprising an updated scheduling capacity for each of the plurality of radio devices.

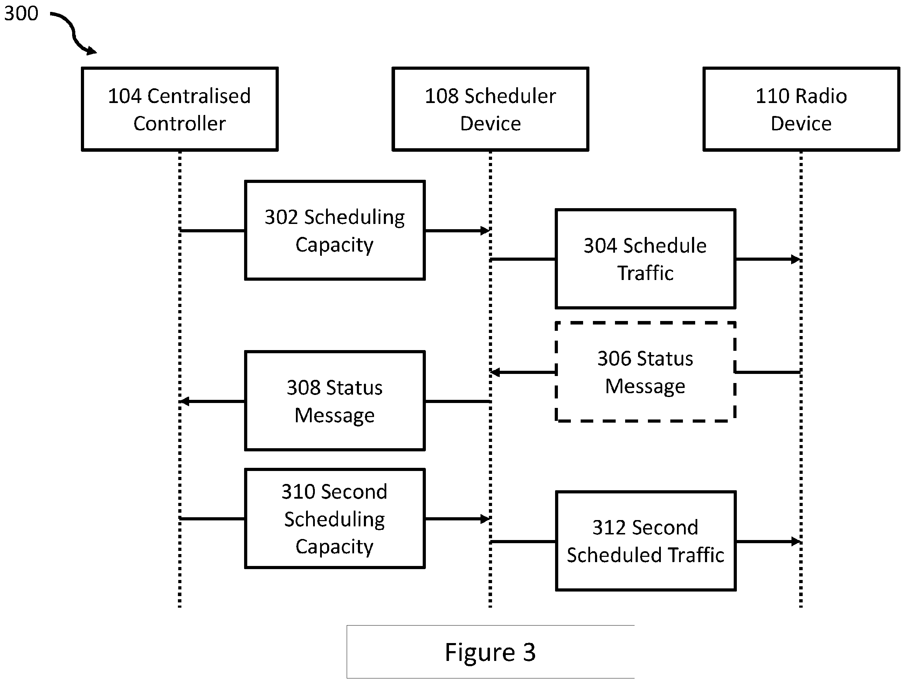

In some examples, the generating is further based on one or more status messages received by the centralised controller from one or more other devices in the telecommunications network, wherein the status messages comprise one or more KPI reports, radio utilisation measurements and/or congestion notifications, and wherein the generated cluster scheduling plan is periodically updated. Thereby the method is responsive to transitory effects such as a network link becoming unavailable or where a network link is operating at reduced capacity (e.g. a lossy link such as a mmWave link) and thus can reduce the risk of deterioration in service quality while optimising available network throughput as conditions change over time. The use of status messages is discussed further in the discussion of figure 3 below.

In some examples, the generating is further based on one or more status messages received by the centralised controller from one or more other devices in the telecommunications network, wherein the status messages comprise one or more KPI reports, radio utilisation measurements and/or congestion notifications, wherein the plurality of radio devices share or do not share radio spectrum, and wherein the generating is further based on balancing demand between the plurality of radio devices. Thereby a fairness criteria between radio devices and/or UE devices can be applied. Further, where two or more of the radio devise share radio spectrum the cluster scheduling plan is able to take account of spectrum interference, as well as shared network throughput capacity, while generating the cluster scheduling plan. The use of status messages is discussed further in the discussion of figure 3 below.

The method then continues to step 206.

At step 206, the method sends, by the centralised controller and to the one or more scheduler devices, the updated scheduling capacity for each of the plurality of radio devices.

In some examples, the method then continues to step 208.

At step 208, the method schedules, by the one or more scheduler devices, the plurality of radio devices to stay within the updated scheduling capacity for each of the plurality of radio devices sent by the centralised controller to the one or more scheduler devices. Thereby the schedulers enact the cluster scheduling plan to ensure that the radio devices stay within their network utilisation budgets.

Figure 3 shows a schematic illustration of a sequence diagram showing messages between the centralised controller, scheduler device and radio device. The figure depicts an example, where the method receives status messages.

The figure depicts the transmission of messages between a centralised controller 104, scheduler device 108 and radio device 110. At message 302 a scheduling capacity is sent from the centralised controller 104 to the scheduler device 108. In some examples this can correspond to step 206 of figure 2. At message 304 scheduled traffic is sent from the scheduler device 108 to the radio device 110 responsive to message 302. In some examples this can correspond to step 208 of figure 2. At message 308 a status message is sent from the scheduler device 108 to the centralised controller 104. In some examples, as discussed above, this status message can be used by the centralised controller 104 to generate a second scheduling capacity. At message 310 a second scheduling capacity is sent from the centralised controller 104 to the scheduler device 108. At message 312 second scheduled traffic is sent from the scheduler device 108 to the radio device 110 responsive to message 310. In some examples, the status message does not originate from the scheduler device 108 but instead originates from radio device 110. In these examples, at message 306 a status message is send from radio device 110 to scheduler device 108 which is subsequently used, wholly or in part, to generate the message 308.

Figure 4 schematically illustrates an example of an electronic device 400 which can be used to implement teachings described above, including method 200.

The electronic device 400 has processing circuitry 410 for performing data processing in response to program instructions and data storage 420 for storing data and instructions to be processed by the processing circuitry 410. In some examples, the processing circuitry 410 includes one or more caches for caching recent data or instructions. The data storage 420 may have a database 430 which can, for example, store network topology information and/or status messages. The device further includes a communication interface 440 which can be used, for example, to obtain/receive network topology information and status messages and can be used to send updated scheduling capacities. It will be appreciated that Figure 4 is merely an example of possible hardware that may be provided in the device and other components may also be provided. The device 400 may additionally or alternatively be provided with one or more user input/output device(s) 450 to receive input from a user (e.g. parameters to determine information for optimising the throughput capacity) or to output information (e.g. a map of network throughput and/or service status) to a user.

The methods discussed above may be performed under control of a computer program executing on a device. Hence a computer program may comprise instructions for controlling a device to perform any of the methods discussed above. The program can be encoded in a computer-readable medium. A computer-readable medium may include non-transitory type media such as physical storage media including storage discs and solid state devices. A computer-readable medium may also or alternatively include transient media such as carrier signals and transmission media. A computer-readable storage medium is defined herein as a non-transitory memory device. A memory device includes memory space within a single physical storage device or memory space spread across multiple physical storage devices.

In the present application, the words "configured to..." are used to mean that an element of an apparatus has a configuration able to carry out the defined operation. In this context, a "configuration" means an arrangement or manner of interconnection of hardware or software. For example, the apparatus may have dedicated hardware which provides the defined operation, or a processor or other processing device may be programmed to perform the function. "Configured to" does not imply that the apparatus element needs to be changed in any way in order to provide the defined operation.

Although illustrative teachings of the disclosure have been described in detail herein with reference to the accompanying drawings, it is to be understood that the invention is not limited to those precise teachings, and that various changes and modifications can be effected therein by one skilled in the art without departing from the scope and spirit of the invention as defined by the appended claims.

Further examples of feature combinations taught by the present disclosure are set out in the following numbered clauses:
1. A computer-implemented method for optimising throughput capacity in a telecommunications network, the telecommunications network comprising a core network, a centralised controller, one or more scheduler devices and a plurality of radio devices, the method comprising:
   obtaining, by the centralised controller, network topology information, wherein the network topology information comprises information on network paths between the core network, the one or more scheduler devices and the plurality of radio devices,
      wherein the one or more scheduler devices are operable to schedule operation of the plurality of radio devices based on a scheduling capacity for each of the plurality of radio devices, and
      wherein two or more of the plurality of radio devices share at least part of the same network path to the core network;
   generating, by the centralised controller and based on the network topology information, a cluster scheduling plan comprising an updated scheduling capacity for each of the plurality of radio devices,
   sending, by the centralised controller and to the one or more scheduler devices, the updated scheduling capacity for each of the plurality of radio devices.
2. The method of clause 1, wherein the obtaining further comprises obtaining a throughput capacity of each of the network paths and an initial scheduling capacity of each of the plurality of radio devices, and wherein the generating is further based on the throughput capacities and the initial scheduling capacities.
3. The method of clause 2, wherein the throughput capacity of one or more of the network paths is insufficient for the worst-case throughput demand when the plurality of radio devices fully utilise their initial scheduling capacity.
4. The method of clause 2 or clause 3, wherein the throughput capacities of the network paths are based on theoretical maximum throughput capacities of the network paths, and/or wherein the initial scheduling capacities are based on the theoretical full radio capacities of the radio devices.
5. The method of any preceding clause, wherein the generating is further based on one or more status messages received by the centralised controller from one or more other devices in the telecommunications network, wherein the status messages comprise one or more KPI reports, radio utilisation measurements and/or congestion notifications, and wherein the generated cluster scheduling plan is periodically updated.
6. The method of any preceding clause, wherein one or more of the network paths comprise one or more half-duplex links and wherein the obtained network topology information includes an indication of the one or more half-duplex links.
7. The method of any preceding clause, the method further comprising scheduling, by the one or more scheduler devices, the plurality of radio devices to stay within the updated scheduling capacity for each of the plurality of radio devices sent by the centralised controller to the one or more scheduler devices.
8. The method of any preceding clause, wherein the centralised controller comprises a Radio Access Network Intelligent Controller (RIC).
9. The method of any preceding clause, wherein the obtaining comprises retrieval from a database, and/or automatic determination through network discovery.
10. The method of any preceding clause, wherein the network paths comprise one or more of dedicated wired, shared wired, dedicated wireless and/or a shared wireless links.
11. The method of any preceding clause, wherein each scheduler device comprises a Distributed Unit (DU).
12. The method of any preceding clause, wherein each of the plurality of radio devices comprise a Radio Unit (RU).
13. The method of any preceding clause, wherein the network path of a first of the plurality of radio devices to the one or more scheduler devices is daisy chained through a second of the plurality of radio devices.
14. The method of any preceding clause, wherein one or more UE devices connect to the telecommunications network through one or more of the plurality of radio devices.
15. The method of any preceding clause, wherein one or more of the one or more scheduler devices and one or more of the plurality of radio devices are combined into one device.
16. The method of any preceding clause, wherein the telecommunications network further comprises a radio access control device, the radio access control device being operable to manage access control for one or more devices in the telecommunications network, and wherein topology information comprises a network path between the radio access control device and the one or more scheduler devices.
17. The method of clause 16, wherein the radio access control device comprises a Centralised Unit (CU).
18. The method of clause 16 or clause 17, wherein the radio access control device is combined with one or more of the one or more scheduler devices and/or one or more of the plurality of radio devices into one device.
19. The method of any of clauses 16 to 18, wherein the network topology information further comprises a network path between the radio access control device and the core network.
20. The method of any preceding clause, wherein the telecommunications network comprises a plurality of scheduler devices wherein each of the plurality of scheduler devices is operable to schedule operation on a different one or more of the plurality of radio devices.
21. The method of clause 20, wherein the network path from the scheduler device which is operable to schedule operation of one of the plurality of radio devices to the core network is daisy chained through a second of the plurality of scheduler devices.
22. The method of any preceding clause,
   wherein the generating is further based on one or more status messages received by the centralised controller from one or more other devices in the telecommunications network, wherein the status messages comprise one or more KPI reports, radio utilisation measurements and/or congestion notifications,
   wherein the plurality of radio devices share or do not share radio spectrum, and
   wherein the generating is further based on balancing demand between the plurality of radio devices.
23. A computer program to control a device to perform the method of any preceding clause.
24. At least one computer-readable medium comprising the computer program of clause 23.
25. A centralised controller device comprising a processor and data storage, the centralised controller device configured to perform the method of any of clauses 1 to 22.

## Claims

1. A computer-implemented method for optimising throughput capacity in a telecommunications network, the telecommunications network comprising a core network, a centralised controller, one or more scheduler devices and a plurality of radio devices, the method comprising:
obtaining, by the centralised controller, network topology information, wherein the network topology information comprises information on network paths between the core network, the one or more scheduler devices and the plurality of radio devices,
wherein the one or more scheduler devices are operable to schedule operation of the plurality of radio devices based on a scheduling capacity for each of the plurality of radio devices, and
wherein two or more of the plurality of radio devices share at least part of the same network path to the core network;
generating, by the centralised controller and based on the network topology information, a cluster scheduling plan comprising an updated scheduling capacity for each of the plurality of radio devices,
sending, by the centralised controller and to the one or more scheduler devices, the updated scheduling capacity for each of the plurality of radio devices.

2. The method of claim 1, wherein the obtaining further comprises obtaining a throughput capacity of each of the network paths and an initial scheduling capacity of each of the plurality of radio devices, and wherein the generating is further based on the throughput capacities and the initial scheduling capacities, for example, wherein the throughput capacity of one or more of the network paths is insufficient for the worst-case throughput demand when the plurality of radio devices fully utilise their initial scheduling capacity.

3. The method of claim 2, wherein the throughput capacities of the network paths are based on theoretical maximum throughput capacities of the network paths, and/or wherein the initial scheduling capacities are based on the theoretical full radio capacities of the radio devices.

4. The method of any preceding claim, wherein the generating is further based on one or more status messages received by the centralised controller from one or more other devices in the telecommunications network, wherein the status messages comprise one or more KPI reports, radio utilisation measurements and/or congestion notifications, and wherein the generated cluster scheduling plan is periodically updated.

5. The method of any preceding claim, wherein one or more of the network paths comprise one or more half-duplex links and wherein the obtained network topology information includes an indication of the one or more half-duplex links.

6. The method of any preceding claim, the method further comprising scheduling, by the one or more scheduler devices, the plurality of radio devices to stay within the updated scheduling capacity for each of the plurality of radio devices sent by the centralised controller to the one or more scheduler devices.

7. The method of any preceding claim, wherein the centralised controller comprises a Radio Access Network Intelligent Controller (RIC).

8. The method of any preceding claim, wherein each scheduler device comprises a Distributed Unit (DU), and/or wherein each of the plurality of radio devices comprise a Radio Unit (RU).

9. The method of any preceding claim, wherein the network path of a first of the plurality of radio devices to the one or more scheduler devices is daisy chained through a second of the plurality of radio devices.

10. The method of any preceding claim, wherein the telecommunications network further comprises a radio access control device, the radio access control device being operable to manage access control for one or more devices in the telecommunications network, and wherein topology information comprises a network path between the radio access control device and the one or more scheduler devices, for example, wherein the radio access control device comprises a Centralised Unit (CU).

11. The method of claim 10, wherein the network topology information further comprises a network path between the radio access control device and the core network.

12. The method of any preceding claim, wherein the telecommunications network comprises a plurality of scheduler devices wherein each of the plurality of scheduler devices is operable to schedule operation on a different one or more of the plurality of radio devices, for example, wherein the network path from the scheduler device which is operable to schedule operation of one of the plurality of radio devices to the core network is daisy chained through a second of the plurality of scheduler devices.

13. The method of any preceding claim,
wherein the generating is further based on one or more status messages received by the centralised controller from one or more other devices in the telecommunications network, wherein the status messages comprise one or more KPI reports, radio utilisation measurements and/or congestion notifications,
wherein the plurality of radio devices share or do not share radio spectrum, and
wherein the generating is further based on balancing demand between the plurality of radio devices.

14. A computer-readable medium comprising instructions which, when executed by a computer, cause the computer to carry out the method of any of claims 1 to 13.

15. A centralised controller device comprising a processor and data storage, the centralised controller device configured to perform the method of any of claims 1 to 13.
